# EUROPÄISCHE PATENTSCHRIFT

(11) **EP 2 198 188 B1**
(45) Veröffentlichungstag und Bekanntmachung des Hinweises auf die Patenterteilung: **18.01.2012**
(21) Anmeldenummer: 08804669.3
(22) Anmeldetag: 24.09.2008
(51) Int. Cl.: F16H 63/32

(54) **Schaltgabel mit Gleitschuhen und Verfahren zur Herstellung einer solchen Schaltgabel**
Shift fork with sliding shoes and method for producing a shift fork of said type
Fourchette de passage des vitesses à patins coulissants, et procédé de production d'une telle fourchette de passage des vitesses

(30) Priorität: 05.10.2007 DE 102007047602
(43) Veröffentlichungstag der Anmeldung: 23.06.2010
(73) Patentinhaber: Schaeffler Technologies GmbH & Co. KG, 91074 Herzogenaurach (DE); Löffelmann, Jochen, 96158 Frensdorf (DE); Reissberger, Stefan, 96193 Wachenroth (DE)
(72) Erfinder: LÖFFELMANN, Jochen, 96158 Frensdorf (DE); REISSBERGER, Stefan, 96193 Wachenroth (DE); KRÄMER, Klaus, 91460 Baudenbach (DE)
(86) Internationale Anmeldenummer: PCT/EP2008/062764
(87) Internationale Veröffentlichungsnummer: WO 2009/047119

(56) Entgegenhaltungen:
- EP-A- 1 650 479
- AT-U1- 8 193
- JP-A- 7 133 865
- US-A- 4 238 012
- US-A- 4 353 449

## Beschreibung

### Gebiet der Erfindung

Die vorliegende Erfindung betrifft eine Schaltgabel eines Fahrzeuggetriebes mit einem gabelförmig ausgebildeten Grundkörper und mit mindestens einem Gleitschuh, der in eine jeweilige Stülprichtung über den Grundkörper gestülpt und formschlüssig mit dem Grundkörper verbunden ist. Des weiteren betrifft die Erfindung ein Verfahren zur Herstellung einer Schaltgabel.

### Hintergrund der Erfindung

Schaltgabeln sind im Stand der Technik allgemein bekannt. Eine Schaltgabel ist bspw. in der Druckschrift DE 199 44 323 A1 beschrieben. An einem gabelförmig ausgebildeten Blechformteil sind dabei an den freien Enden Gleitschuhe vorgesehen. Derartige Schaltgabeln sind weitestgehend ohne spanabhebende Bearbeitung durch Umformung von Blech, z. B. mittels Stanzen, Ziehen oder Pressen bzw. durch Kombinationen dieser Verfahren hergestellt. Deshalb sind die Schaltgabeln aus Blech besonders in der Massenproduktion kostengünstig herzustellen und werden immer häufiger eingesetzt. An dem Stahlblech lassen sich in einfacher Weise weitere Konstruktionselemente aus Stahl durch Schweißen oder mittels anderer Verbindungsarten anbringen.

So ist beispielsweise die Schaltgabel nach DE 199 44 323 A1 mit einer aus Flacheisen hergestellten Schaltstange verbunden. Aufwendig ist allerdings die Befestigung der Gleitschuhe an dem Stahlblech der Schaltgabel, denn die Gleitschuhe an derartigen Schaltgabeln sind zumeist aus gleitfördemdem Material und nicht aus Stahl gefertigt. Nach dem Stand der Technik werden für Gleitschuhe Materialien, wie z. B. Kunststoff oder Messing, vorgesehen. Messing ist ein Werkstoff, der häufig angewendet wird, da dieser außer hervorragenden selbstschmierenden Laufeigenschaften eine relativ hohe Verschleißfestigkeit aufweist. Die Befestigung derartiger Gleitschuhe an den freien Enden der Schaltgabel durch Schweissen ist bei Dünnblechschaltgabeln problematisch, da sich die Schaltgabeln verziehen.

Oftmals ist ein Herstellen einer stoffschlüssigen Verbindung durch Schweißen aufgrund fehlender Schweißeignung der zu verschweißenden Stoffe bzw. fehlender Kombinationsfähigkeit der Schweißeignungen unterschiedlicher Stoffe auch nicht geeignet, um Gleitschuhe an der Schaltgabel zu befestigen. In einem solchen Fall können Gleitschuhe durch beispielsweise Clipsen befestigt werden. Diese Befestigungsart erfordert allerdings eine hohe Genauigkeit bei der Herstellung, und auch die Montage ist relativ aufwendig, weswegen dieses Verfahren kostenintensiv ist.

Die Druckschrift DE 10 2005 040 692 schlägt daher eine Schaltgabel aus Blech vor, die mittels Kaltumformen hergestellt ist und die einen Grundkörper mit gabelförmigen Enden aufweist, wobei zumindest ein Ende von zumindest einem Gleitschuh umfasst ist, und die hergestellt wird, indem in einem ersten Verfahrensschritt das Blech zusammen mit einem Gleitschuhblech in ein Umformwerkzeug eingelegt wird und in einem zweiten Verfahrensschritt das Blech entsprechend der benötigten Geometrie zusammen mit dem Gleitschuhblech zur Schaltgabel umgeformt wird.

Um die richtige Anordnung des Gleitschuhblechs während der Umformung zu gewährleisten, ist das Gleitschuhblech dabei um das Ende des Grundkörpers umgeschlagen. Dies erfordert jedoch eine kompliziertere Ausgestaltung sowohl des Gleitschuhs als auch des Grundkörpers. Dadurch erhöhen sich jedoch die Herstellungskosten, wobei bereits geringe Mehrkosten insbesondere bei in hohen Stückzahlen hergestellten Schaltgabeln nicht zu vernachlässigen sind.

US 4,353,449 A1 offenbart eine Schaltgabel mit Gleitschuhen, die mit Laschen versehen sind. Die Laschen sind einteilig mit dem Gleitschuh ausgebildet und verschnappen an dem Grundkörper der Schaltgabel.

JP 07 133865 A, die als nächstliegender Stand der Technik gegenüber den Ansprüchen 1 und 8 angesehen wird, schlägt vor, einen U-förmigen Gleitschuh an einer Schaltgabel zu verstemmen.

### Aufgabe der Erfindung

Es ist daher eine Aufgabe der Erfindung, die voranstehend aufgeführten Nachteile zu beseitigen und eine Schaltgabel bereitzustellen, die kostengünstiger hergestellt werden kann.

### Zusammenfassung der Erfindung

Die Aufgabe der Erfindung wird durch eine Schaltgabel nach Anspruch 1 und ein Verfahren nach Anspruch 8 gelöst.

Die erfindungsgemäße Schaltgabel für ein Fahrzeuggetriebe umfasst einen gabelförmig ausgebildeten Grundkörper und mindestens einen Gleitschuh, der in eine jeweilige Stülprichtung über den Grundkörper gestülpt und formschlüssig mit dem Grundkörper verbunden ist, und ist dadurch gekennzeichnet, dass der Grundkörper mindestens ein Fixierungselement für jeden Gleitschuh aufweist und der mindestens eine Gleitschuh jeweils ein Komplementärelement aufweist, um eine Fixierung des mindestens einen Gleitschuhs senkrecht zu der Stülprichtung bereitzustellen.

Mittels einer solchen Kombination aus Fixierungselement und Komplementärelement kann die sichere Anordnung des Gleitschuhs auf dem Grundkörper gewährleistet werden. Des weiteren werden mittels der erreichten Fixierung kostengünstige Formschlußverfahren, wie etwa Verstemmen, einsetzbar, um die formschlüssige Verbindung bereitzustellen.

Es ist vorgesehen, dass der Grundkörper als jeweiliges Fixierungselement einen Steg parallel zu der Stülprichtung aufweist und der mindestens eine Gleitschuh als Komplementärelement jeweils einen gewölbten Abschnitt aufweist.

Diese vorgeschlagene Ausgestaltung von Fixierungselement und Komplementärelement läßt sich besonders einfach bei der Ausbildung von dem mindestens einen Gleitschuh und dem Grundkörper vornehmen und ermöglicht so eine besonders kostengünstige Herstellung bereit.

Es kann vorgesehen sein, dass der Steg und der gewölbte Abschnitt jeweils eine ballige Form aufweisen, um eine Kraftübertragung senkrecht zu der Stülprichtung zwischen dem Gleitschuh und dem Grundkörper mittels Flächenpressung bereitzustellen.

Unter "ballig" ist dabei zu verstehen, dass die Kanten des Stegs bzw. des gewölbten Abschnitts, die parallel zu der Stülprichtung verlaufen, mit einem gro-βen Radius auf die entsprechende angrenzende Fläche ausgebildet sind. Somit entsteht ein S-förmiger Übergang von einer entsprechenden angrenzenden Fläche auf den herausragenden Steg bzw. gewölbten Abschnitt. Über die Kontaktflächen entlang der S-förmigen Übergänge ist dann eine Kraftübertragung senkrecht zur Stülprichtung über Flächenpressung möglich, wodurch die übrigen Verbindungsstellen zwischen Gleitschuh und Grundkörper entlastet werden. Der Radius kann bspw. mit 100 mm ausgeführt sein.

Dabei kann vorgesehen sein, dass jeder Steg eine Quernut aufweist.

Des weiteren kann vorgesehen sein, dass der Grundkörper mindestens eine Durchgangsbohrung für jeden Gleitschuh senkrecht zu der Stülprichtung aufweist und der mindestens eine Gleitschuh einen U-förmigen, zwei Schenkel umfassenden Querschnitt aufweist, und die formschlüssige Verbindung gebildet ist, indem der Rand von einem für jede Durchgangsbohrung in jedem Schenkel vorgesehenen Loch in die entsprechende Durchgangsbohrung verstemmt ist.

ES kann vorgesehen sein , dass zur Ausbildung der formschlüssigen Verbindung zusätzlich der Rand des mindestens einen Gleitschuhs in die entsprechende Quernut verstemmt ist.

Die mindestens eine Durchgangsbohrung kann sowohl zu der Längserstreckung einer entsprechenden Quernut als auch zu der entsprechenden Stülprichtung senkrecht durch den Grundkörper verlaufen.

Außerdem kann eine Durchgangsbohrung zu beiden Seiten jedes Stegs vorgesehen sein.

Das Verstemmen des mindestens einen Gleitschuhs mit dem Grundkörper stellt ein besonders einfaches und damit kostengünstiges Formschlußverfahren bereit und wird letztendlich durch die erfindungsgemäße Ausgestaltung des mindestens einen Gleitschuhs und des Grundkörpers ermöglicht.

Der Grundkörper kann grundsätzlich aus Messing oder einem anderen metallischen Werkstoff oder aber aus einem Kunststoff hergestellt sein. Des weiteren kann der Grundkörper mittels eines Gußverfahrens hergestellt worden sein oder aber bspw. aus einem gestanzten oder gebogenen Blech ausgebildet sein.

Für den mindestens einen Gleitschuh kommt grundsätzlich Messing oder ein anderer Werkstoff mit guten Gleiteigenschaften, d.h. einem geringen Haftreibungskoeffizienten, in Betracht. Der mindestens eine Gleitschuh kann auch aus Kunststoff hergestellt sein.

Das erfindungsgemäße Verfahren zur Herstellung einer Schaltgabel ist gekennzeichnet durch die Schritte des Bereitstellens mindestens eines Gleitschuhs, der einen U-förmigen, zwei Schenkel umfassenden Querschnitt aufweist, wobei jeder Schenkel einen gewölbten Abschnitt aufweist und zu beiden Seiten jedes gewölbten Abschnitts jeweils ein Loch vorgesehen ist, des Bereitstellens eines gabelförmigen Grundkörpers mit einem Steg für jeden Gleitschuh parallel zu einer jeweiligen Stülprichtung des Gleitschuhs, wobei zu beiden Seiten jedes Stegs jeweils eine Durchgangsbohrung vorgesehen ist, die zu der Stülprichtung senkrecht verläuft, des Stülpens jedes Gleitschuhs über den Grundkörper in eine entsprechende Stülprichtung, so dass jedes Loch über einer entsprechenden Durchgangsbohrung zu liegen kommt, und des Verstemmens des Rands jedes Lochs in die entsprechende Durchgangsbohrung.

Das Verfahren kann des weiteren dadurch gekennzeichnet sein, dass in jedem Steg jeweils eine Quernut vorgesehen ist und das Verstemmen des weiteren erfolgt, indem der Rand des mindestens einen Gleitschuhs in die entsprechende Quernut verstemmt wird.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

Die Erfindung wird nachfolgend anhand von Ausführungsbeispielen näher erläutert. In der dazugehörigen Zeichnung zeigt dabei:
- Fig. 1: eine Perspektivansicht einer erfindungsgemäßen Schaltgabel
- Fig. 2: eine Perspektivansicht eines Gleitschuhs einer erfindungsgemäßen Schaltgabel ,
- Fig. 3: eine vergrößerte teilweise Perspektivansicht eines Grundkörpers einer erfindungsgemäßen Schaltgabel,
- Fig. 4: eine Perspektivansicht einer nicht beanspruchten Schaltgabel
- Fig.5: eine Perspektivansicht eines Gleitschuhs einer nicht beanspruchten Schaltgabel,
- Fig. 6a bis 6: cverschiedene Ansichten einer erfindungsgemäßen Schaltgabel die mit einer Schiebemuffe in Eingriff befindlich ist.

### Ausführliche Beschreibung der Zeichnungen

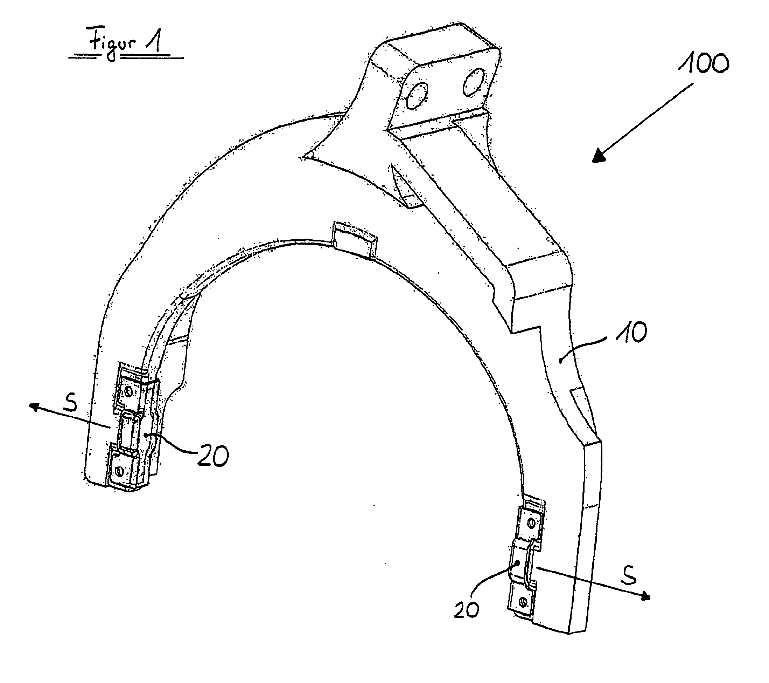

Figur 1 zeigt eine erfindungsgemäβe Schaltgabel 100.

Die Schaltgabel 100 umfasst einen Grundkörper 10 und zwei Gleitschuhe 20, die einander gegenüberliegend an den Enden des gabelförmigen Grundkörpers 10 angeordnet sind.

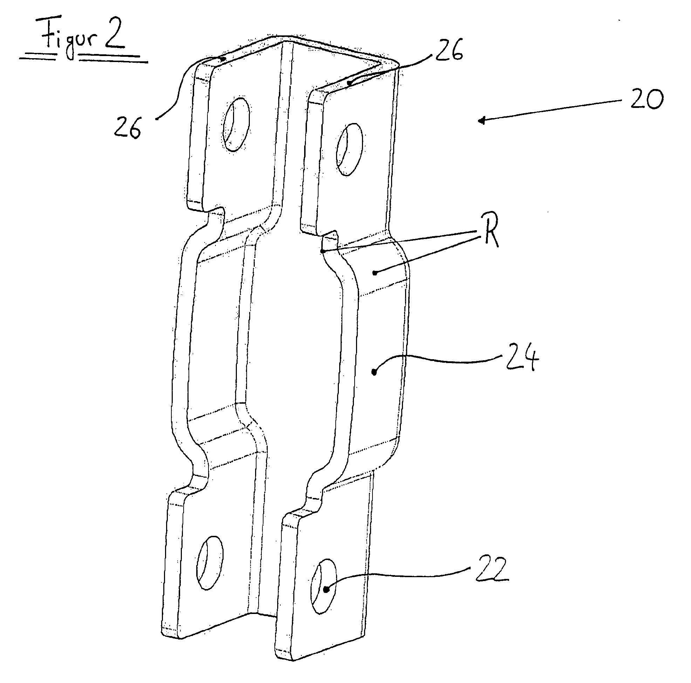

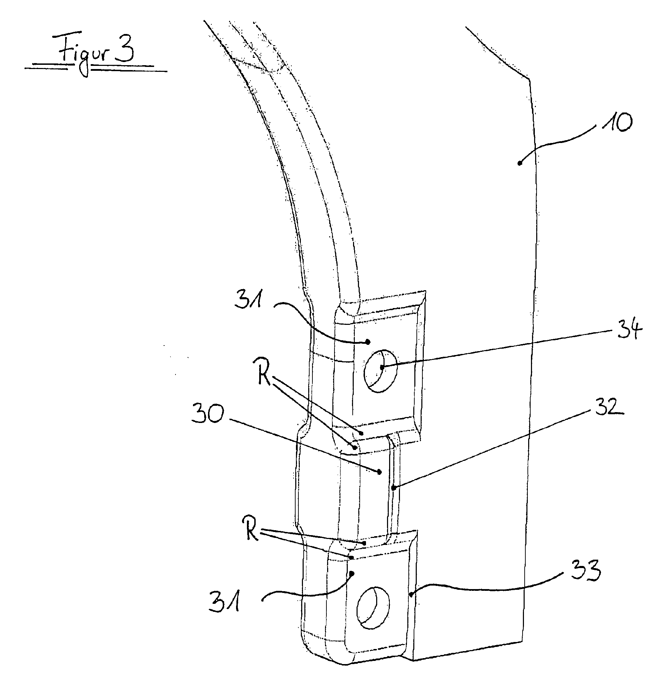

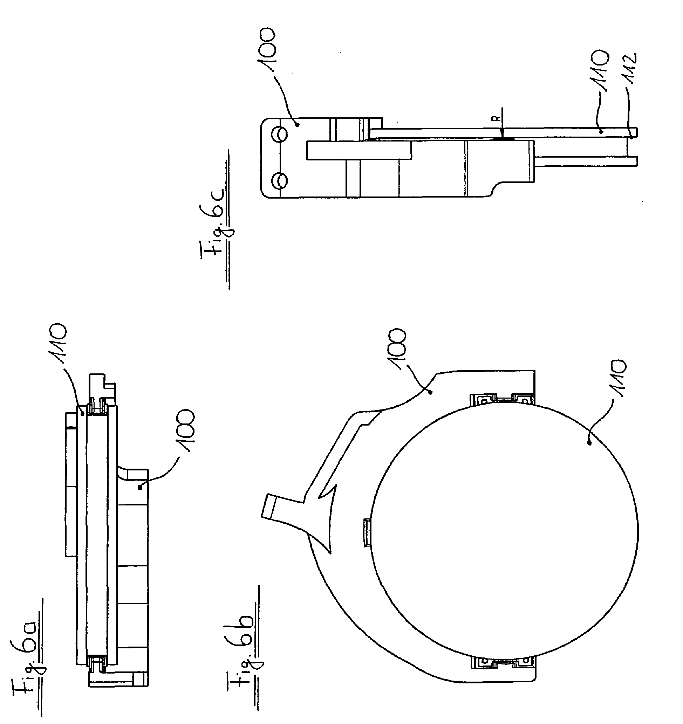

Die Figuren 2 und 3 zeigen eine vergrößerte Ansicht eines Gleitschuhs 20 bzw. eines Endes des gabelförmigen Grundkörpers 10, das zur Aufnahme eines entsprechenden Gleitschuhs 20 ausgebildet ist. Die Figuren 6a bis 6c zeigen verschiedene Ansichten einer erfindungsgemäßen Schaltgabel , die mit einer Schiebemuffe 110 in Eingriff befindlich ist. Die Figuren 2, 3 und 6a bis 6c werden nachfolgend übergreifend beschrieben.

Der Gleitschuh 20 weist einen U-förmigen Querschnitt mit zwei Schenkeln 26 auf. Jeder Schenkel 26 umfasst einen gewölbten Abschnitt 24, der zentral in jedem Schenkel 26 ausgebildet ist. Zu beiden Seiten jedes gewölbten Abschnitts 24 ist jeweils ein Loch 22 ausgebildet.

Der gewölbte Abschnitt 24 jedes Schenkels 26 jedes Gleitschuhs 20 ist entsprechend der Form eines Stegs 30 ausgebildet, der an dem gabelförmigen Grundkörper 10 vorgesehen ist. Der gewölbte Abschnitt 24 umschließt so den Steg 30 und verhindert eine Bewegung des Gleitschuhs senkrecht zu einer Stülprichtung S, in der ein jeweiliger Gleitschuh 20 auf den gabelförmigen Grundkörper 10 gestülpt wird.

Dabei weisen der Steg 30 und der gewölbte Abschnitt 24 jeweils eine ballige Form auf, um eine hohe Kraftübertragung senkrecht zu der Stülprichtung S zwischen dem Gleitschuh 20 und dem Grundkörper 10 mittels Flächenpressung zu ermöglichen.

Unter "ballig" ist dabei zu verstehen, dass die Kanten des Stegs 30 bzw. des gewölbten Abschnitts 24, die parallel zu der Stülprichtung S verlaufen, mit einem großen Radius R auf die entsprechende angrenzende Fläche ausgebildet sind. Somit entsteht ein S-förmiger Übergang von einer entsprechenden angrenzenden Fläche auf den herausragenden Steg 30 bzw. gewölbten Abschnitt 24. Über die Kontaktflächen entlang der S-förmigen Übergänge bzw. der Radien R ist dann eine hohe Kraftübertragung senkrecht zur Stülprichtung über Flächenpressung möglich, wodurch die übrigen Verbindungsstellen zwischen Gleitschuh 20 und Grundkörper 10 entlastet werden. Der Radius R kann mit etwa 100 mm ausgeführt sein, abhängig von den übrigen Größenverhältnissen. Insbesondere bei Materialien mit guten Gleiteigenschaften, etwa Messing oder Kunststoff, kann es im Gleitschuh 20 sonst zu Verformungen und Brüchen, insbesondere an den Verbindungsstellen mit dem Grundkörper 10 kommen.

Durch die ballige Form werden die zwischen den gewölbten Abschnitten 24 und den Seitenflächen 112 der Schiebemuffen 110 wirkenden Reibkräfte über die Radien R per Flächenpressung übertragen und die Verbindungsstellen entlastet. Des weiteren ist so zwischen den Radien R an der Außenseite der Gleitschuhe 20 und den Seitenflächen 112 eine Schmiernut gebildet, in der sich ein Schmiermittelkeil bilden kann, wodurch ein leichtes Drehen der Schaltgabel 100 um die Schiebemuffe 110 ermöglicht ist.

In der vorliegenden Ausführungsform sind zwei Vertiefungen 31 zu beiden Seiten des Stegs 30 vorgesehen, so dass der Steg 30 in dem gabelförmigen Grundkörper 10 gebildet wird. Auf diese Weise ist die Höhe des Stegs 30 eben mit der des übrigen Grundkörpers 10, nur die Vertiefungen 31 sind ausgenommen. Grundsätzlich kann jedoch auch vorgesehen sein, dass keine Vertiefungen 31 vorgesehen sind und sich der Steg aus dem übrigen Grundkörper 10 heraus erhebt.

Zu beiden Seiten des Stegs 30 ist in der jeweiligen Vertiefung 31 eine Durchgangsbohrung 34 vorgesehen. Stülpt man einen Gleitschuh 20 über den gabelförmigen Grundkörper 10, so dass der gewölbte Abschnitt 24 den Steg 30 umschließt, kommen die Löcher 22 über einer entsprechenden Durchgangsbohrung 34 zu liegen.

Des weiteren stößt der Gleitschuh 20 an einem Anschlag 33 an, so dass der Gleitschuh 20 nunmehr lediglich in Richtung des Gabelinneren zurückbewegt werden kann.

Um diese Bewegung und damit ein Herausfallen des Gleitschuhs 20 zu verhindern, wird der Gleitschuh nunmehr mit dem gabelförmigen Grundkörper verstemmt, indem der Rand des Lochs 22 in eine entsprechende Durchgangsbohrung 34 verstemmt wird. Der Gleitschuh 20 ist nun formschlüssig mit dem gabelförmigen Grundkörper 10 verbunden und kann nicht mehr herausfallen.

Darüber hinaus ist es zusätzlich möglich, in dem Steg 30 eine Quernut 32 vorzusehen, deren Längserstreckung senkrecht zu der Stülprichtung S verläuft. Der gewölbte Abschnitt 24 des Gleitschuhs 20 ist entsprechend in seiner Tiefe so ausgebildet, dass er über der Quernut 32 endet. Somit kann auch der Rand des gewölbten Abschnitts 24 in die Quernut 32 verstemmt werden und eine zusätzliche Sicherung bereitstellen.

Es kann vorgesehen sein, dass die Quernut 32 und der Anschlag 33 fluchtend verlaufen, grundsätzlich kann jedoch vorgesehen sein, dass sie in verschiedenen Tiefen verlaufen. So ist in der dargestellten Ausführungsform bspw. vorgesehen, dass der Anschlag 33 tiefer als die Quernut 32 in den Grundkörper 10 hineingesetzt ist, so dass der gewölbte Abschnitt 24 eine geringere Tiefenerstreckung als der übrige Gleitschuh 20 aufweist.

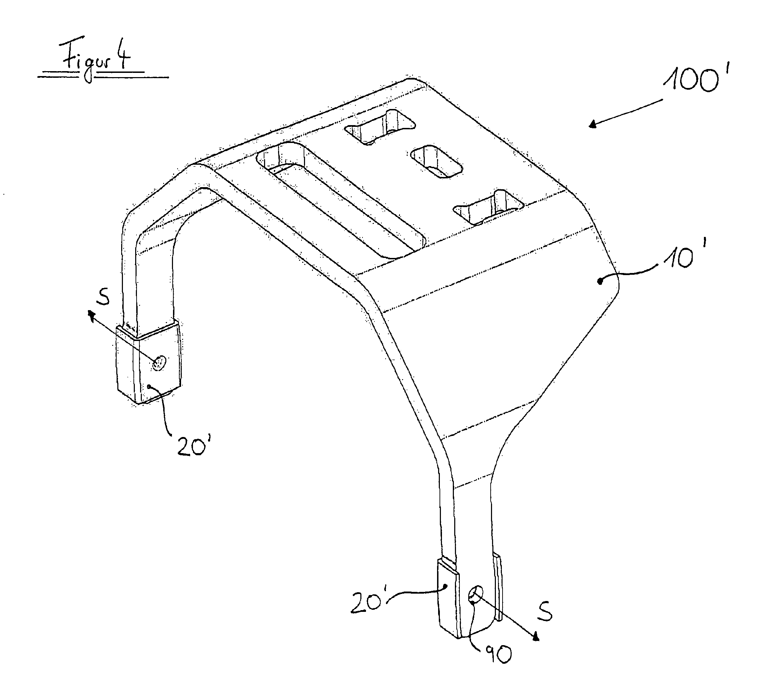

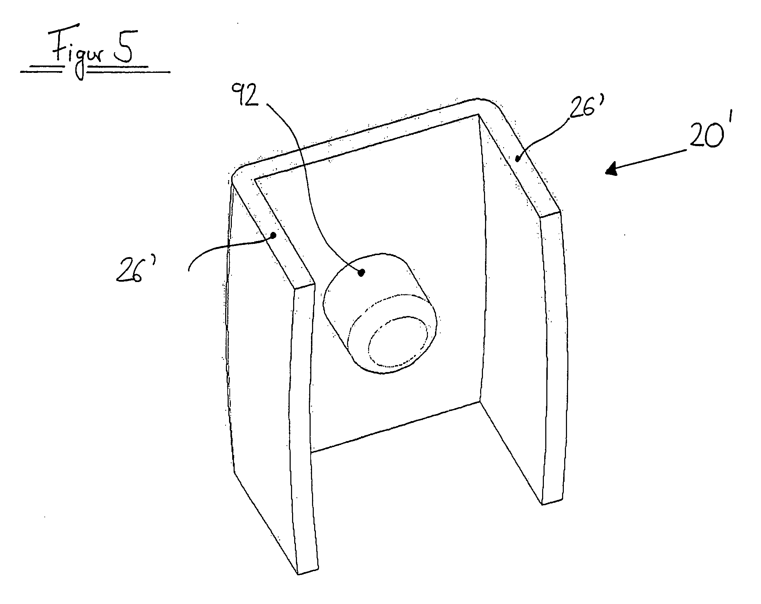

Die Figuren 4 und 5 zeigen eine Schaltgabel 100' und werden im Folgenden figurenübergreifend beschrieben.

Die Schaltgabel 100' umfasst einen gabelförmigen Grundkörper 10' und zwei Gleitschuhe 20', die jeweils in einer Stülprichtung S über die Enden des gabelförmigen Grundkörpers 10' gestülpt sind.

Jeder Gleitschuh 20' weist einen U-förmigen Querschnitt mit zwei Schenkeln 26' auf. Des weiteren ist in dem Gleitschuh 20' ein Vorsprung 92 vorgesehen, der sich in das Innere des U erstrecht. Mittels dieses Vorsprungs 92 wird jeder Gleitschuh 20' auf dem gabelförmigen Grundkörper 10' fixiert, so dass er in eine Richtung senkrecht zu der Stülprichtung S nicht mehr verrutschen kann. Dabei wird der Vorsprung 92 in eine entsprechend in dem Grundkörper 10' vorgesehene Bohrung 90 gesteckt.

Die Schenkel 26' sind in ihrer Länge so ausgeführt, dass sie über den Grundkörper 10' hinausreichen und hinter dem Grundkörper 10' dann entsprechend umgebogen oder verstemmt werden können, um eine formschlüssige Verbindung jedes Gleitschuhs 20' mit dem Grundkörper 10' bereitzustellen.

Grundsätzlich sind jedoch die voranstehend ausgeführten formschlüssigen Verbindungsmethoden jeweils auch auf das entsprechend andere Gleitschuhkonzept anwendbar. Dies bedeutet, dass auch bei einem Gleitschuh 20 entsprechend der ersten Ausführungsform die Schenkel 26 in einer Länge ausgeführt werden können, so dass sie hinter dem Grundkörper 10 umgebogen bzw. verstemmt werden können. Des weiteren kann auch in den Schenkeln 26' der Gleitschuh 20' in der zweiten Ausführungsform Löcher vorgesehen sein, die in entsprechende Durchgangsbohrungen des Grundkörpers 10' verstemmt werden.

Des weiteren können sämtliche als Durchgangsbohrungen bezeichnete Bohrungen natürlich auch als Sackbohrungen ausgeführt werden und sämtliche als Sackbohrungen dargestellte Bohrungen auch als Durchgangsbohrungen ausgeführt werden.

### Bezugszeichenliste

- 10: Grundkörper
- 10': Grundkörper
- 20: Gleitschuh,
- 20': Gleitschuh
- 22: Loch
- 24: gewölbter Abschnitt
- 26: Schenkel
- 30: Steg
- 31: Vertiefung
- 32: Quernut
- 33: Anschlag
- 34: Durchgangsbohrung
- 90: Bohrung
- 92: Vorsprung
- 100: Schaltgabel
- 100': Schaltgabel
- 110: Schiebemuffe
- 112: Seitenfläche

- R: Radius
- S: Stülprichtung

## Patentansprüche

1. Schaltgabel (100) eines Fahrzeuggetriebes mit einem gabelförmig ausgebildeten Grundkörper (10) und mit mindestens einem Gleitschuh (20) , der in eine jeweilige Stülprichtung (S) über den Grundkörper (10) gestülpt und formschlüssig mit dem Grundkörper (10 ) verbunden ist, wobei der Grundkörper (10) mindestens ein Fixierungselement (30) für jeden Gleitschuh (20) aufweist und der mindestens eine Gleitschuh (20) jeweils ein Komplementärelement (24) aufweist, um eine Fixierung des mindestens einen Gleitschuhs (20) senkrecht zu der Stülprichtung (S) bereitzustellen, **dadurch gekennzeichnet, dass** der Grundkörper (10) als jeweiliges Fixierungselement einen Steg (30) parallel zu der Stülprichtung (S) aufweist und der mindestens eine Gleitschuh (20) als Komplementärelement jeweils einen gewölbten Abschnitt (24) aufweist, der den jeweiligen Steg (30) umfasst.

2. Schaltgabel (100) nach Anspruch 1, **dadurch gekennzeichnet, dass** der Steg (30) und der gewölbte Abschnitt (24) jeweils eine ballige Form aufweisen, um eine Kraftübertragung senkrecht zu der Stülprichtung (S) zwischen dem Gleitschuh (20) und dem Grundkörper (10) mittels Flächenpressung bereitzustellen.

3. Schaltgabel (100) nach Anspruch 1 oder 2, **dadurch gekennzeichnet, dass** jeder Steg (30) eine Quernut (32) aufweist.

4. Schaltgabel (100) nach einem der Ansprüche 1 bis 3, **dadurch gekennzeichnet, dass** der Grundkörper (30) mindestens eine Durchgangsbohrung (34) für jeden Gleitschuh (20) senkrecht zu der Stülprichtung (S) aufweist und der mindestens eine Gleitschuh (20) einen U-förmigen, zwei Schenkel (26) umfassenden Querschnitt aufweist, und die formschlüssige Verbindung gebildet ist, indem der Rand von einem für jede Durchgangsbohrung (34) in jedem Schenkel (26) vorgesehenen Loch (22) in die entsprechende Durchgangsbohrung (34) verstemmt ist.

5. Schaltgabel (100) nach Anspruch 4, **dadurch gekennzeichnet, dass** jeder Steg (30) eine Quernut (32) aufweist und zur Ausbildung der formschlüssigen Verbindung zusätzlich der Rand des mindestens einen Gleitschuhs (20) in die entsprechende Quernut (32) verstemmt ist.

6. Schaltgabel (100) nach Anspruch 5, **dadurch gekennzeichnet, dass** die mindestens eine Durchgangsbohrung (34) sowohl zu der Längserstreckung einer entsprechenden Quernut (32) als auch zu der entsprechenden Stülprichtung (S) senkrecht durch den Grundkörper (10) verläuft.

7. Schaltgabel (100) nach einem der Ansprüche 4 bis 6, **dadurch gekennzeichnet, dass** jeweils eine Durchgangsbohrung (34) zu beiden Seiten jedes Stegs (30) vorgesehen ist.

8. Verfahren zur Herstellung einer Schaltgabel (100) **gekennzeichnet durch** die folgenden Schritte:
- Bereitstellen mindestens eines Gleitschuhs (20), der einen U-förmigen, zwei Schenkel (26) umfassenden Querschnitt aufweist, wobei jeder Schenkel (26) einen gewölbten Abschnitt (24) aufweist und zu beiden Seiten jedes gewölbten Abschnitts (24) jeweils ein Loch (22) vorgesehen ist,
- Bereistellen eines gabelförmigen Grundkörpers (10) mit einem Steg (30) für jeden Gleitschuh (20) parallel zu einer jeweiligen Stülprichtung (S) des Gleitschuhs (20), wobei zu beiden Seiten jedes Stegs (30) jeweils eine Durchgangsbohrung (34) vorgesehen ist, die zu der Stülprichtung (S) senkrecht verläuft,
- Stülpen jedes Gleitschuhs (20) über den Grundkörper (10) in die entsprechende Stülprichtung (S), so dass jedes Loch (22) über einer entsprechenden Durchgangsbohrung (34) zu liegen kommt,
- Verstemmen des Rands jedes Lochs (22) in die entsprechende Durchgangsbohrung (34).

9. Verfahren zur Herstellung einer Schaltgabel (100) nach Anspruch 8, **dadurch gekennzeichnet, dass** in jedem Steg (30) jeweils eine Quernut (32) vorgesehen ist und das Verstemmen des weiteren erfolgt, indem der Rand des mindestens einen Gleitschuhs (20) in die entsprechende Quernut (32) verstemmt wird.

## Claims

1. Shift fork (100) of a vehicle gearbox, having a fork-shaped basic body (10) and having at least one sliding shoe (20) which is mounted over the basic body (10) in a respective mounting direction (S) and is connected in a positively locking manner to the basic body (10), wherein the basic body (10) has at least one fixing element (30) for each sliding shoe (20) and the at least one sliding shoe (20) has in each case one complementary element (24) for fixing the at least one sliding shoe (20) perpendicular to the mounting direction (S), **characterized in that** the basic body (10) has, as a respective fixing element, a web (30) parallel to the mounting direction (S), and the at least one sliding shoe (20) has, as a complementary element, in each case one bulged portion (24) which surrounds the respective web (30).

2. Shift fork (100) according to Claim 1, **characterized in that** the web (30) and the bulged portion (24) have in each case a spherical shape in order to realize a transmission of force perpendicular to the mounting direction (S) between the sliding shoe (20) and the basic body (10) by means of surface pressure.

3. Shift fork (100) according to Claim 1 or 2, **characterized in that** each web (30) has a transverse groove (32).

4. Shift fork (100) according to one of Claims 1 to 3, **characterized in that** the basic body (10) has at least one through bore (34) for each sliding shoe (20) perpendicular to the mounting direction (S), and the at least one sliding shoe (20) has a U-shaped cross section comprising two limbs (26), and the positively locking connection is formed by virtue of the edge of a hole (22) provided for each through bore (34) in each limb (26) being caulked into the corresponding through bore (34).

5. Shift fork (100) according to Claim 4, **characterized in that** each web (30) has a transverse groove (32) and, to form the positively locking connection, additionally the edge of the at least one sliding shoe (20) is caulked into the corresponding transverse groove (32).

6. Shift fork (100) according to Claim 5, **characterized in that** the at least one through bore (34) runs through the basic body (10) perpendicular both to the longitudinal extent of a corresponding transverse groove (32) and also to the corresponding mounting direction (S).

7. Shift fork (10) according to one of Claims 4 to 6, **characterized in that** in each case one through bore (34) is provided at both sides of each web (30).

8. Method for manufacturing a shift fork (100), **characterized by** the following steps:
- providing at least one sliding shoe (20) which has a U-shaped cross section comprising two limbs (26), wherein each limb (26) has a bulged portion (24) and in each case one hole (22) is provided at both sides of each bulged portion (24),
- providing a fork-shaped basic body (10) with a web (30) for each sliding shoe (20) parallel to a respective mounting direction (S) of the sliding shoe (20), wherein at both sides of each web (30) there is provided in each case one through bore (34) which runs perpendicular to the mounting direction (S),
- mounting each sliding shoe (20) over the basic body (10) in the corresponding mounting direction (S), such that each hole (22) comes to rest over a corresponding through bore (34),
- caulking the edge of each hole (22) into the corresponding through bore (34).

9. Method for manufacturing a shift fork (100) according to Claim 8, **characterized in that** in each case one transverse groove (32) is provided in each web (30), and the caulking furthermore takes place by virtue of the edge of the at least one sliding shoe (20) being caulked into the corresponding transverse groove (32).

## Revendications

1. Fourchette de passage des vitesses (100) d'une boîte de vitesses de véhicule avec un corps de base (10) réalisé en forme de fourchette et avec au moins un patin coulissant (20), qui est emboîté sur le corps de base (10) dans une direction d'emboîtement respective (S) et qui est assemblé par complémentarité de forme avec le corps de base (10), dans laquelle le corps de base (10) présente au moins un élément de fixation (30) pour chaque patin coulissant (20) et ledit au moins un patin coulissant (20) présente respectivement un élément complémentaire (24), afin de réaliser une fixation dudit au moins un patin coulissant (20) perpendiculairement à la direction d'emboîtement (S), **caractérisée en ce que** le corps de base (10) présente comme élément de fixation respectif une nervure (30) parallèle à la direction d'emboîtement (S) et ledit au moins un patin coulissant (20) présente respectivement comme élément complémentaire une partie incurvée (24), qui entoure la nervure respective (30).

2. Fourchette de passage des vitesses (100) selon la revendication 1, **caractérisée en ce que** la nervure (30) et la partie incurvée (24) présentent respectivement une forme bombée, afin de réaliser une transmission de force perpendiculairement à la direction d'emboîtement (S) par pression superficielle entre le patin coulissant (20) et le corps de base (10).

3. Fourchette de passage des vitesses (100) selon la revendication 1 ou 2, **caractérisée en ce que** chaque nervure (30) présente une rainure transversale (32).

4. Fourchette de passage des vitesses (100) selon l'une quelconque des revendications 1 à 3, **caractérisée en ce que** le corps de base (10) présente au moins un perçage traversant (34) pour chaque patin coulissant (20) perpendiculairement à la direction d'emboîtement (S) et ledit au moins un patin coulissant (20) présente une section transversale en forme de U comprenant deux branches (26), et l'assemblage par complémentarité de forme est réalisé en rabattant le bord d'un trou (22) prévu dans chaque branche (26) pour chaque perçage traversant (34) dans le perçage traversant correspondant (34).

5. Fourchette de passage des vitesses (100) selon la revendication 4, **caractérisée en ce que** chaque nervure (30) présente une rainure transversale (32) et le bord dudit au moins un patin coulissant (20) est en outre rabattu dans la rainure transversale correspondante (32) pour réaliser l'assemblage par complémentarité de forme.

6. Fourchette de passage des vitesses (100) selon la revendication 5, **caractérisée en ce que** ledit au moins un perçage traversant (34) s'étend à travers le corps de base (10) perpendiculairement aussi bien à la dimension longitudinale d'une rainure transversale correspondante (32) qu'à la direction d'emboîtement correspondante (S).

7. Fourchette de passage des vitesses (100) selon l'une quelconque des revendications 4 à 6, **caractérisée en ce qu'**il est chaque fois prévu un perçage traversant (34) sur les deux côtés de chaque nervure (30).

8. Procédé de fabrication d'une fourchette de passage des vitesses (100), **caractérisé par** les opérations suivantes:
- préparer au moins un patin coulissant (20), qui présente une section transversale en forme de U comprenant deux branches (26), dans lequel chaque branche (26) présente une partie incurvée (24) et un trou (22) est respectivement prévu sur les deux côtés de chaque partie incurvée (24),
- préparer un corps de base (10) en forme de fourchette, avec une nervure (30) pour chaque patin coulissant (20) parallèlement à une direction d'emboîtement respective (S) du patin coulissant (20), dans lequel il est prévu sur les deux côtés de chaque nervure (30) respectivement un perçage traversant (34) qui s'étend perpendiculairement à la direction d'emboîtement (S),
- emboîter chaque patin coulissant (20) sur le corps de base (10) dans la direction d'emboîtement correspondante (S), de telle manière que chaque trou (22) vienne se placer au-dessus d'un perçage traversant correspondant (34),
- rabattre le bord du trou (22) dans le perçage traversant correspondant (34).

9. Procédé de fabrication d'une fourchette de passage des vitesses (100) selon la revendication 8, **caractérisé en ce qu'**il est respectivement prévu une rainure transversale (32) dans chaque nervure (30) et on effectue en plus le rabattement en rabattant le bord dudit au moins un patin coulissant (20) dans la rainure transversale correspondante (32).
